# FASCICULE DE BREVET EUROPEEN

(11) **EP 0 570 275 B1**
(45) Date de publication et mention de la délivrance du brevet: **13.11.1996**
(21) Numéro de dépôt: 93401202.2
(22) Date de dépôt: 11.05.1993
(51) Int. Cl.: F16B 5/02, B60H 1/00, B60R 11/00

(54) **Dispositif de fixation entre deux objets, en particulier entre un support et un tableau de commande**
Anordnung zum Verbinden zweier Gegenstände miteinander, insbesondere Bedienungstafel und Träger
Device for the fixation between two objects, in particular between control panel and support

(30) Priorité: 13.05.1992 FR 9205809
(43) Date de publication de la demande: 18.11.1993
(73) Titulaire: Valeo Climatisation, 78321 La Verrière (FR)
(72) Inventeur: Schramm, François, F-78370 Plaisir (FR)
(74) Mandataire: Gamonal, Didier

(56) Documents cités:
- FR-A- 2 409 408
- FR-A- 2 570 135
- FR-A- 2 575 116
- US-A- 3 977 814

## Description

L'invention concerne un dispositif de fixation entre deux objets, en particulier entre un support et un tableau de commande.

Elle s'applique notamment aux appareils de chauffage-ventilation et/ou de climatisation pour véhicules automobiles.

Un tel appareil comprend classiquement un boîtier qui loge notamment un groupe moto-ventilateur, un radiateur de chauffage et des volets de distribution et qui forme aussi support pour un tableau de commande. Ce dernier comporte un certain nombre d'organes pour assurer le réglage de la ventilation, la distribution et le chauffage de l'air destiné à être introduit dans un habitacle de véhicule automobile.

Le boîtier de l'appareil de chauffage est destiné à être reçu dans un logement de forme adaptée, qui est prévu à cet effet dans la carrosserie du véhicule, soit dans le compartiment moteur, soit dans l'habitacle. Le tableau de commande de l'appareil de chauffage est destiné à être reçu dans une ouverture de forme adaptée, qui est prévue dans un habillage faisant partie de la planche de bord du véhicule ou rattaché à cette planche de bord.

Dans certains appareils de chauffage, le tableau de commande est déjà fixé rigidement sur le boîtier et c'est tout l'ensemble qui est ensuite installé dans le véhicule automobile destiné à être équipé de l'appareil de chauffage.

Cette solution présente un inconvénient du fait qu'il existe des dispersions dans les tolérances de fabrication des composants entrant dans la fabrication des véhicules automobiles, et c'est le cas notamment pour le tableau de commande et l'habillage destiné à le recevoir.

Dans ces conditions, il en résulte que le tableau de commande, qui est fixé préalablement sur le boîtier, ne se trouve pas nécessairement placé en position correcte par rapport à l'ouverture de l'habillage, qui est destinée à le recevoir.

Cela oblige alors à modifier la position relative du tableau de commande et du boîtier, en débloquant d'abord les fixations du tableau de commande sur le boîtier, puis en déplaçant le tableau de commande pour l'amener dans la position requise, et enfin en rebloquant les fixations.

Cette solution connue n'est pas satisfaisante car elle réclame des interventions manuelles qui prennent du temps et sont peu compatibles avec les cadences rapides imposées par les chaînes de montage automatisé utilisées dans l'industrie automobile.

Il est également connu, par le document US-A-3,977,814, un dispositif de fixation entre un moteur à combustion interne et un compresseur.

Ce dispositif comprend une première patte propre à être fixée sur le moteur à combustion interne et une deuxième patte rigidement fixée à la première, et comportant des ouvertures de forme oblongue permettant le montage et le réglage du compresseur dans une direction sensiblement verticale.

Ce dispositif n'offrant qu'une seule direction de réglage, présente sensiblement le même inconvénient que le dispositif précédent décrit en y ajoutant le fait que, généralement, le compresseur est logé dans un endroit peu accessible du compartiment moteur.

L'invention a notamment pour but de surmonter les inconvénients précités.

C'est, de façon générale, un but de l'invention de procurer un dispositif qui peut être fixé entre deux objets de manière à former une liaison et à autoriser un débattement relatif limité entre les deux objets, avant leur immobilisation dans leurs positions respectives définitives.

C'est en particulier un but de l'invention de procurer un tel dispositif qui permet un débattement limité des deux objets dans trois dimensions ou directions de l'espace, tout en assurant une solidarisation entre les deux éléments.

C'est encore un but de l'invention de procurer un tel dispositif de fixation qui peut être utilisé tout particulièrement pour la fixation d'un tableau de commande sur un support, tel qu'un boîtier d'un appareil de chauffage-ventilation et/ou de climatisation d'un véhicule automobile.

L'invention propose à cet effet un dispositif de fixation entre deux objets, comprenant une première patte propre à être fixée à un premier objet, une seconde patte propre à être reliée à un second objet, et des moyens de réglage portés par la seconde patte pour permettre une fixation réglable du second objet, caractérisé en ce qu'il comprend en outre une chaîne articulée formée d'une succession de segments ou maillons articulés deux à deux entre eux ainsi qu'entre la première patte et la seconde patte autour d'axes d'articulation parallèles entre eux.

Conformément à l'invention, on peut ainsi établir une liaison entre un premier objet et un second objet en utilisant de préférence deux dispositifs de fixation tels que mentionnés précédemment.

Le ou chaque dispositif de fixation comporte une première patte fixée à un premier objet, par exemple un boîtier d'un appareil de chauffage-ventilation et/ou de climatisation, et une seconde patte fixée à un deuxième objet, par exemple un tableau de commande d'un tel appareil.

La chaîne articulée du dispositif autorise un débattement limité de la seconde patte par rapport à la première, dans un plan perpendiculaire aux axes d'articulation de la chaîne articulée.

Autrement dit, on obtient un débattement limité en deux dimensions dans un plan qui s'étend perpendiculairement aux axes d'articulation de la chaîne articulée.

Par ailleurs, les moyens de réglage portés par la seconde patte permettent une fixation réglable du second objet suivant un axe de débattement limité qui s'étend parallèlement aux axes d'articulation de la chaîne articulée, c'est-à-dire perpendiculairement au plan défini précédemment et donc dans une troisième dimension de l'espace.

Dans ces conditions, le second objet peut être déplacé par rapport au premier objet suivant une course à débattement limité, dans les trois dimensions de l'espace, tout en maintenant une solidarisation entre le premier et le second objet.

Dans une forme de réalisation préférée de l'invention, la première patte est de configuration généralement plane et est traversée par un trou de fixation.

Ce dernier peut recevoir, par exemple, une vis propre à coopérer par exemple avec un trou borgne fileté ménagé dans un bossage que comporte le premier objet.

Avantageusement, cette première patte a la forme d'un oeillet traversé par un trou circulaire d'axe parallèle aux axes d'articulation de la chaîne articulée.

Avantageusement, la chaîne articulée comporte deux segments, à savoir un premier segment articulé autour d'un premier axe d'articulation à la première patte et un second segment articulé autour d'un second axe d'articulation à la seconde patte, le premier segment et le second segment étant articulés entre eux autour d'un troisième axe d'articulation qui est parallèle au premier axe et au second axe déjà cités.

Ainsi, en utilisant au moins deux segments articulés pour constituer la chaîne articulée du dispositif, la seconde patte peut être plus ou moins rapprochée ou éloignée de la première patte et en outre déplacée angulairement par rapport à celle-ci.

Avantageusement, les axes d'articulation de la chaîne articulée sont formés chacun par une "charnière film" obtenue par un amincissement localisé d'un matériau déformable dont est constituée la chaîne articulée.

Selon une autre caractéristique de l'invention, la seconde patte est coudée et comprend une branche plate qui s'étend dans une direction sensiblement parallèle à celle des axes d'articulation de la chaîne articulée.

Les moyens de réglage du dispositif de l'invention comprennent avantageusement un trou oblong qui traverse la seconde patte et qui comporte un grand axe s'étendant parallèlement aux axes d'articulation de la chaîne articulée.

De cette manière, on autorise un débattement limité du second objet par rapport au premier, et cela dans une direction perpendiculaire au plan de débattement autorisé par la chaîne articulée.

Selon une autre caractéristique de l'invention, le dispositif comprend des moyens de blocage pour immobiliser la première patte et la seconde patte dans une position rapprochée.

On peut ainsi maintenir le second objet dans une position fixe et rapprochée par rapport au premier objet, par exemple pendant le transport.

A titre d'exemple, les moyens de blocage peuvent comprendre une tige de blocage ayant une extrémité articulée sur la première patte et une extrémité opposée en forme de fourche propre à s'assembler sur un pion.

Le dispositif de l'invention est avantageusement formé d'un seule pièce par moulage d'une matière plastique appropriée.

Dans la description qui suit, faite à titre d'exemple, on se réfère au dessin annexé, sur lequel :
- la figure 1 est une vue partielle de dessus d'un dispositif de fixation selon l'invention interposé entre un premier objet et un second objet ;
- la figure 2 est une vue partielle de côté correspondant à la figure 1 ;
- la figure 3 est une vue partielle à échelle agrandie montrant une partie de la chaîne articulée de la figure 1, dans une position intermédiaire ; et
- la figure 4 est une vue d'un détail du dispositif de fixation selon l'invention.

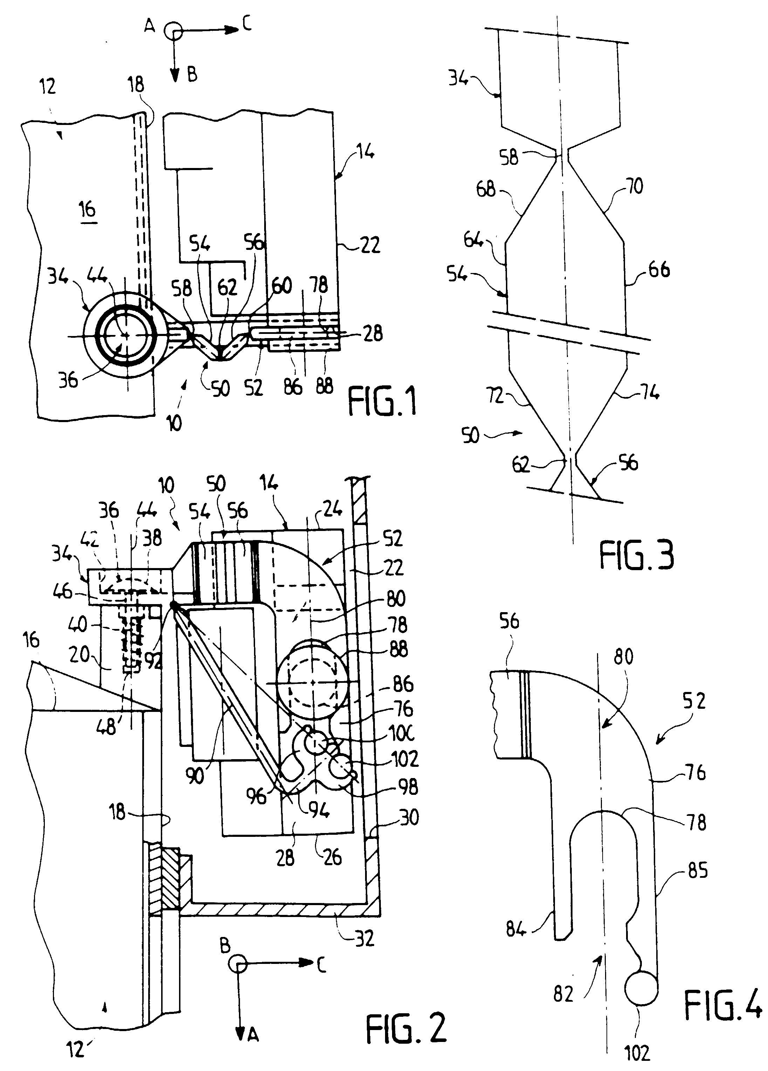

On se réfère tout d'abord aux figures 1 et 2 qui représentent un dispositif 10 selon l'invention interposé entre un premier objet 12 et un second objet 14. Dans l'exemple, le premier objet 12 est un boîtier d'un appareil de chauffage-ventilation et/ou de climatisation d'un véhicule automobile. Ce boîtier comprend notamment une face supérieure 16 et une face avant 18. A l'une des extrémités de la face 16 est prévu un bossage 20 (figure 2) sur lequel est fixé le dispositif 10. L'objet 12 comporte aussi un second bossage analogue (non visible sur les dessins) prévu à une autre extrémité de la face 16 pour permettre la fixation d'un autre dispositif 10 (non représenté). Dans le boîtier constituant l'objet 12 sont disposés notamment un groupe moto-ventilateur, un radiateur de chauffage et différents volets de distribution.

Le second objet 14 est, dans l'exemple, un tableau de commande comportant un certain nombre d'organes de commande (non représentés) pour permettre de régler notamment la ventilation, la distribution et le chauffage de l'air destiné à être introduit dans l'habitacle d'un véhicule automobile.

Le tableau de commande 14 comprend notamment une face avant 22 de forme générale rectangulaire destinée à être tournée vers l'intérieur de l'habitacle du véhicule automobile. Le tableau de commande 14 est limité par un bord supérieur 24 généralement horizontal, un bord inférieur 26 généralement horizontal et deux bords latéraux verticaux dont un seul, à savoir le bord 28 est visible sur les figures 1 et 2. Le tableau 14 est destiné à se placer dans une ouverture 30 de forme adaptée ménagée dans un habillage 32 qui fait partie de la planche de bord du véhicule automobile ou qui est rattaché à cette dernière.

Lorsque le boîtier 16 est mis en place dans le véhicule automobile, à l'emplacement qui lui est destiné, le tableau de commande 14 ne se trouve pas nécessairement exactement dans l'ouverture 30, en raison des dispersions des tolérances de fabrication évoquées précédemment.

Le dispositif de fixation 10 permet de déplacer le tableau de commande 14 par rapport au boîtier 16 suivant un débattement limité dans les trois dimensions ou directions de l'espace, de manière à l'amener dans la position voulue dans l'ouverture 30.

Le dispositif 10 comprend une première patte 34 de structure généralement plate qui, dans l'exemple a la forme d'un oeillet destiné à être fixé sur le bossage 20 au moyen d'une vis 36 constituée d'une tête 38 et d'une tige filetée 40. La patte 34 comprend un passage cylindrique 42 d'axe 44 destiné à permettre l'introduction de la tête 38 de la vis et un passage cylindrique 46 de plus petit diamètre, également d'axe 44 et destiné à laisser passage à la tige filetée 40. Cette dernière est vissée dans un trou borgne 48 ménagé dans le bossage 20.

Le dispositif 10 comprend en outre une chaîne articulée 50, qui est articulée, d'une part, à la première patte 34 et d'autre part, à une seconde patte 52. La chaîne articulée 50 comprend deux segments ou maillons 54 et 56. Le premier segment 54 est articulé autour d'un axe d'articulation 58 à la première patte 34, tandis que le second segment 56 est articulé autour d'un axe d'articulation 60 à la seconde patte 52. Par ailleurs, les segments 54 et 56 sont articulés entre eux autour d'un troisième axe d'articulation 62. Les axes d'articulation 58, 60 et 62 s'étendent dans des directions parallèles entre elles qui, dans l'exemple, sont également parallèles à l'axe 44 de fixation de la vis 36.

Les axes d'articulation 58, 60 et 62 sont avantageusement formés par amincissement de la matière constitutive de la chaîne articulée de manière à former une "charnière film". Dans l'exemple, chacun des segments 54 et 56 présente, en vue en coupe perpendiculairement aux axes d'articulation, la forme générale d'un hexagone irrégulier. Ainsi, comme montré à la figure 3, le segment 54 est délimité par deux côtés principaux parallèles 64 et 66, deux petits côtés 68 et 70 formant entre eux un angle d'environ 76° et se rapprochant pour former l'axe d'articulation 58 et deux autres petits côtés 72 et 74 formant entre eux un angle d'environ 76° et se rapprochant pour former l'axe d'articulation 62. Le segment 56 possède une structure similaire.

La seconde patte 52 est coudée et comprend une branche plate 76 qui s'étend dans une direction sensiblement parallèle à celle des axes d'articulation 58, 60 et 62 de la chaîne articulée 50. La patte 76 est munie d'un trou oblong 78 qui la traverse de part en part et qui possède un grand axe 80 (figure 2) s'étendant parallèlement aux axes d'articulation 58, 60 et 62 de la chaîne articulée 50. Le trou oblong 78 débouche au niveau du bord inférieur de cette patte par une entrée 82 en formant deux branches 84, 85 (figure 4). Le trou oblong 78 peut ainsi recevoir un téton 86 rattaché au côté 28 du tableau de commande 14 et terminé par une tête de retenue 88.

La chaîne articulée 50 permet un débattement limité de la seconde patte 52 par rapport à la première patte dans un plan qui s'étend perpendiculairement aux axes d'articulation 58, 60 et 62 de la chaîne articulée 50. On obtient ainsi un premier déplacement suivant deux directions perpendiculaires B et C, c'est-à-dire suivant les deux dimensions du plan (figure 1).

Le trou oblong 78 autorise un débattement limité du téton 86 et donc du tableau de commande 12, dans une troisième direction A perpendiculaire au plan déjà mentionné.

Ainsi, on peut déplacer le tableau 14 par rapport au boîtier 12 sur une course limitée dans les trois dimensions pour que ce tableau vienne se placer correctement dans l'ouverture 30 de l'habillage 32.

Le dispositif 10 comprend en outre une tige de blocage 90 ayant une première extrémité 92 articulée, par exemple par une "charnière film", sur la première patte 34, dans une direction généralement orthogonale par rapport aux axes d'articulation de la chaîne d'articulation 50. La tige 90 comporte en outre une extrémité repliée 94 terminée par deux fourches 96 et 98 propres à s'emboîter sur deux pions 100, 102 prévus pour le pion 100 sur le bord latéral vertical 28 et pour le pion 102 à l'extrémité libre de la branche 85 de la patte 76. Lorsque les deux fourches 96 et 98 sont en position de coopération avec les pions 100 et 102, la première patte 34 et la seconde patte 52 sont en position rapprochée, et il en est de même pour le boîtier 12 et le tableau de commande 14. Cette position rapprochée facilite notamment le transport de l'ensemble en immobilisant d'une part la patte 52 par rapport à la patte 34 et d'autre part le tableau de commande 14 par rapport à la patte 52.

Après que le boîtier a été installé sur la carrosserie d'un véhicule automobile, il convient de libérer la tige de blocage 90 de chacun des dispositifs 10 pour permettre d'amener le tableau de commande 14 en position correcte dans l'ouverture 30 de l'habillage 32.

Le dispositif de l'invention est avantageusement réalisé d'une seule pièce par moulage d'une matière plastique résistante.

Le tableau de commande 14 peut être fixé au boîtier 12 par deux dispositifs 10 comme déjà mentionné, ou encore par deux paires de dispositifs.

En outre, pour assurer l'immobilisation du dispositif il peut être prévu que la tige 90 ne comporte qu'une seule fourche 96 ou 98 et qu'un seul pion 100 ou 102 soit prévu sur le bord 28 ou la patte 52.

Bien que l'invention ait été décrite en référence particulière à la fixation d'un tableau de commande sur le boîtier d'un appareil de chauffage-ventilation et/ou de climatisation, il est bien entendu qu'elle peut être utilisée pour d'autres applications.

## Revendications

1. Dispositif de fixation entre deux objets, comprenant une première patte (34) propre à être fixée à un premier objet (12), une seconde patte (52) propre à être reliée à un second objet (14), et des moyens de réglage (78) portés par la seconde patte (52) pour permettre la fixation du second objet (14), caractérisé en ce qu'il comprend en outre une chaîne articulée (50) formée d'une succession de segments ou maillons (54, 56) articulés deux à deux entre eux ainsi qu'entre la première patte (34) et la seconde patte (52) autour d'axes d'articulation (58,60,62) parallèles entre eux.

2. Dispositif selon la revendication 1, caractérisé en ce que la première patte (34) est de configuration généralement plane et est traversée par un trou de fixation (42,46).

3. Dispositif selon la revendication 2, caractérisé en ce que la première patte (34) a la forme d'un oeillet traversé par un trou circulaire (42,46) d'axe (44) parallèle aux axes d'articulation (58,60,62) de la chaîne articulée (50).

4. Dispositif selon l'une des revendications 1 à 3, caractérisé en ce que la chaîne articulée (50) comporte deux segments, à savoir un premier segment (54) articulé à la première patte (34) autour d'un premier axe (58), un second segment (56) articulé à la seconde patte (52) autour d'un second axe (60), le premier segment (54) étant articulé au second segment (56) autour d'un troisième axe d'articulation (62) s'étendant parallèlement au premier axe d'articulation (58) et au second axe d'articulation (60).

5. Dispositif selon la revendication 4, caractérisé en ce que les axes d'articulation (58,60,62) sont formés chacun par une "charnière film" obtenue par un amincissement localisé d'un matériau déformable dont est constituée la chaîne articulée.

6. Dispositif selon l'une des revendications 1 à 5, caractérisé en ce que la seconde patte (52) est coudée et comprend une branche plate (76) qui s'étend dans une direction sensiblement parallèle à celle des axes d'articulation (58,60,62) de la chaîne articulée (50).

7. Dispositif selon la revendication 6, caractérisé en ce que les moyens de réglage comprennent un trou oblong (78) qui traverse la seconde patte (52) et qui comporte un grand axe (80) s'étendant parallèlement aux axes d'articulation de la chaîne articulée.

8. Dispositif selon l'une des revendications 1 à 7, caractérisé en ce qu'il comprend des moyens de blocage (90) pour immobiliser la première patte (34) et la seconde patte (52) dans une position rapprochée.

9. Dispositif selon la revendication 8, caractérisé en ce que les moyens de blocage comprennent une tige de blocage (90) ayant une extrémité (92) articulée sur la première patte (34) et une extrémité opposée en forme de fourche (96,98) propre à s'assembler sur un pion (100,102).

10. Dispositif selon l'une des revendications 1 à 9, caractérisé en ce qu'il est formé d'une seule pièce par moulage d'une matière plastique.

## Patentansprüche

1. Anordnung zum Verbinden zweier Gegenstände miteinander, umfassend einen ersten Ansatz (34), der an einem ersten Gegenstand (12) befestigt werden kann, und einen zweiten Ansatz (52), der mit einem zweiten Gegenstand (14) verbunden werden kann, sowie Einstellmittel (78), die am zweiten Ansatz (52) angebracht sind, um eine verstellbare Befestigung des zweiten Gegenstands (14) zu ermöglichen, **dadurch gekennzeichnet**, daß sie außerdem eine Gelenkkette (50) umfaßt, die aus einer Abfolge von Segmenten oder Gliedern (54, 56) besteht, die paarweise aneinander sowie zwischen dem ersten Ansatz (34) und dem zweiten Ansatz (52) um parallel zueinander angeordnete Gelenkachsen (58, 60, 62) angelenkt sind.

2. Anordnung nach Anspruch 1 , **dadurch gekennzeichnet**, daß der erste Ansatz (34) eine allgemein flache Gestaltung aufweist und ein Befestigungsloch (42, 44) durch ihn hindurchgeht.

3. Anordnung nach Anspruch 2 , **dadurch gekennzeichnet**, daß der erste Ansatz (34) die Form eines Befestigungsauges mit einem kreisförmigen Loch (42, 46) aufweist, dessen Achse (44) parallel zu den Gelenkachsen (58, 60, 62) der Gelenkkette (50) verläuft.

4. Anordnung nach einem der Ansprüche 1 bis 3 , **dadurch gekennzeichnet**, daß die Gelenkkette (50) zwei Segmente umfaßt, und zwar ein erstes Segment (54), das um eine erste Gelenkachse (58) an den ersten Ansatz (34) angelenkt ist, und ein zweites Segment (56), das um eine zweite Gelenkachse (60) an den zweiten Ansatz (52) angelenkt ist, wobei das erste Segment (54) um eine dritte Gelenkachse (62), die parallel zur ersten Gelenkachse (58) und zur zweiten Gelenkachse (60) verläuft, an das zweite Segment (56) angelenkt ist.

5. Anordnung nach Anspruch 4 , **dadurch gekennzeichnet**, daß die Gelenkachsen (58, 60, 62) jeweils durch ein "Gelenkband" gebildet werden, das durch eine örtlich begrenzte Einschnürung eines verformbaren Werkstoffs erzielt wird, aus dem die Gelenkkette besteht.

6. Anordnung nach einem der Ansprüche 1 bis 5 , **dadurch gekennzeichnet**, daß der zweite Ansatz (52) abgewinkelt ist und einen flachen Schenkel (76) umfaßt, der sich in einer Richtung erstreckt, die in etwa parallel zur Richtung der Gelenkachsen (58, 60, 62) der Gelenkkette (50) verläuft.

7. Anordnung nach Anspruch 6 , **dadurch gekennzeichnet**, daß die Einstellmittel ein Langloch (78) umfassen, das durch den zweiten Ansatz (52) hindurchgeht und dessen große Achse (80) sich parallel zu den Gelenkachsen der Gelenkkette erstreckt.

8. Anordnung nach einem der Ansprüche 1 bis 7 , **dadurch gekennzeichnet**, daß die Arretiermittel (90) umfaßt, um den ersten Ansatz (34) und den zweiten Ansatz (52) in einer angenäherten Position zu sichern.

9. Anordnung nach Anspruch 8 , **dadurch gekennzeichnet**, daß die Arretiermittel eine Arretierstange (90) umfassen, die ein an den ersten Ansatz (34) angelenktes Ende (92) und ein gegenüberliegendes gabelförmiges Ende (96, 98) aufweist, das an einen Stift (100, 102) angefügt werden kann.

10. Anordnung nach einem der Ansprüche 1 bis 9 , **dadurch gekennzeichnet**, daß sie einstückig durch Formpressen aus Kunststoff hergestellt wird.

## Claims

1. Device for fixing together two objects, comprising a first lug (34) suitable for being fixed to a first object (12), a second lug (52) suitable for being connected to a second object (14), and adjustment means (78) carried by the second lug (52) to allow the fixing of the second object (14), characterised in that it also comprises an articulated chain (50) formed by a succession of segments or links (54, 56) articulated in pairs on each other and between the first lug (34) and the second lug (52) about articulation axes (58, 60, 62) parallel to each other.

2. Device according to Claim 1, characterised in that the first lug (34) has a flat configuration overall and has a fixing hole (42, 46) passing through it.

3. Device according to Claim 2, characterised in that the first lug (34) is in the form of an eyelet with a circular hole (42, 46) passing through it, with its axis (44) parallel to the articulation axes (58, 60, 62) of the articulated chain (50).

4. Device according to one of Claims 1 to 3, characterised in that the articulated chain (50) has two segments, namely a first segment (54) articulated on the first lug (34) about a first axis (58), a second segment (56) articulated on the second lug (52) about a second axis (60), the first segment (54) being articulated on the second segment (56) about a third articulation axis (62) extending parallel to the first articulation axis (58) and to the second articulation axis (60).

5. Device according to Claim 4, characterised in that the articulation axes (58, 60, 62) are each formed by a "film hinge" obtained by a localised thinning of a deformable material from which the articulated chain is made.

6. Device according to one of Claims 1 to 5, characterised in that the second lug (52) is angled and comprises a flat arm (76) which extends in a direction substantially parallel to that of the articulation axes (58, 60, 62) of the articulated chain (50).

7. Device according to Claim 6, characterised in that the adjustment means comprise an oblong hole (78) which passes through the second lug (52) and which has a major axis (80) extending parallel to the articulation axes of the articulated chain.

8. Device according to one of Claims 1 to 7, characterised in that it comprises locking means (90) for immobilising the first lug (34) and the second lug (52) in a position close together.

9. Device according to Claim 8, characterised in that the locking means comprise a locking rod (90) having one end (92) articulated on the first lug (34) and an opposite end in the form of a fork (96, 98) suitable for being connected to a stud (100, 102).

10. Device according to one of Claims 1 to 9, characterised in that it is formed in a single piece by plastic moulding.
